# EUROPEAN PATENT SPECIFICATION

(11) **EP 0 780 535 B1**
(45) Date of publication and mention of the grant of the patent: **04.07.2001**
(21) Application number: 96309158.2
(22) Date of filing: 16.12.1996
(51) Int. Cl.: E05F 5/08, B62D 25/12, F16B 39/30

(54) **Adjustable abutment**
Einstellbarer Anschlag
Butée réglable

(30) Priority: 20.12.1995 US 575525
(43) Date of publication of application: 25.06.1997
(73) Proprietor: ILLINOIS TOOL WORKS INC., Glenview, Illinois 60025 (US)
(72) Inventor: Trauscht, James R., Downers Grove, Illinois 60515 (US); Taylor, Philip A., New Lenox, Illinois 60405 (US)
(74) Representative: Gordon, Michael Vincent

(56) References cited:
- FR-A- 2 565 649
- US-A- 2 355 486
- US-A- 3 336 962
- US-A- 4 186 476
- US-A- 4 653 968

## Description

The present invention relates to an automobile adjustable abutment which is arranged to engage a bonnet of the automobile as the bonnet is brought down into a locked position over an engine compartment of the automobile.

In the usual case, at least two of the adjustable abutments are provided at respective sides of the engine compartment to vertically align the bonnet with the bodywork when the bonnet is closed, the adjustable abutments thus forming part of bonnet bumper assemblies.

A prior art bonnet bumper assembly has included a workpiece, which may, for example, be the frame of the engine compartment, having an aperture formed therein which is coined or otherwise deformed to define a helical thread about the aperture. An abutment member having an enlarged end and a threaded shank portion extending from the enlarged end is arranged to be threadingly received by the aperture. The abutment member is rotated into the aperture by a sufficient number of revolutions so that the enlarged end is at a desired position to align the bonnet when closed. Also, indentations about the aperture have been provided in the engine compartment frame to enable the relatively thin sheet metal into which the aperture is formed to receive abutment members having relatively large threads.

Such prior art bonnet bumper assemblies exhibit the deficiency that, after numerous closings of the bonnet, the vibration caused by the closing of the bonnet can cause the threaded abutment member to rotate in the aperture and thus become misadjusted. As a result, after such numerous bonnet closings, the prior art abutment members do not properly align the bonnet with the adjacent bodywork. Further, prior art abutment members have had a flat end surface for engaging the underside of the bonnet. Such flat engaging surfaces allow the bonnet to vibrate laterally during automobile movement and do not positively locate the bonnet in the proper lateral position upon being closed.

To address these problems in the bonnet bumper assemblies of the prior art, the bonnet bumper assembly shown in US-A-4653968, has an adjustable rotatable abutment member whose inadvertent rotation, after being adjusted, is precluded notwithstanding the vibrations caused by the closing of the automobile bonnet.

The abutment member is also capable of preventing lateral bonnet vibration and positively locating the bonnet in its proper lateral position upon being closed.

To these ends, the bonnet bumper assembly shown in US-A-4653968 comprises a workpiece including an aperture and a helical internal marginal portion defined around the aperture, and an abutment member having an end portion arranged to engage the bonnet when closed, a shank portion extending from the end portion including a helical thread for being threadingly received by the aperture, and detent means including first means carried by the shank portion in the form of ribs and second means carried by the workpiece in the form of indentations and arranged to co-operate with the first means for releasably locking the shank portion within the aperture against rotation at predetermined rotational intervals of the shank portion.

The abutment member end portion includes a part-spherical surface portion for co-acting with a stamped recess in the underside of the bonnet to prevent lateral bonnet vibration and to provide repeated lateral alignment of the bonnet upon each closure thereof.

Notwithstanding the advantages of the bonnet bumper assembly of US-A-4653968 there is still a need in the art for a bonnet bumper assembly of the same type which includes a means for lifting the bonnet by a small amount when a bonnet latch mechanism for retaining the bonnet is released.

It is also known from FR-A-2565649 for a similar, but not necessarily adjustable, abutment to include a housing with an axial bore containing a spring biased plunger and with means for preventing the plunger from passing completely through the bore.

According to the present invention, however, there is provided an automobile adjustable abutment in an automobile frame which has a substantially helical marginal portion defining an aperture and a first plurality of detent means at circumferentially spaced intervals on said helical marginal portion and for engaging an automobile bonnet which is movable relatively to said automobile frame, said adjustable abutment comprising:
a member having an end portion engaging said automobile bonnet and having a shank portion extending from said end portion for insertion through said aperture in said automobile frame, said shank portion including a helical thread threadingly engaging said helical marginal portion around said aperture, and said shank portion further including a second plurality of detent means at circumferentially spaced intervals engaging with said first plurality of detent means on said helical marginal portion, thereby releasably locking said member against rotation with respect to said automobile frame to set said member at a selected position with respect to said automobile bonnet;
characterised in that said member is in the form of a housing having an axial bore with a portion of reduced radial dimension within said end portion such that said portion of reduced radial dimension defines a shoulder within said axial bore;
a plunger is provided, said plunger having an elongate cylindrical portion and a disk-like base of greater radial dimension than said elongate cylindrical portion, said plunger being disposed within said axial bore such that said elongate cylindrical portion extends through said portion of reduced radial dimension and said disk-like base interferes with said shoulder to prevent said plunger from passing completely through said axial bore; and
means is provided for biasing said disk-like base of said plunger towards said shoulder;
whereby, in use, when a latch mechanism for retaining said automobile bonnet is released, said automobile bonnet is lifted relatively to said automobile frame by an amount corresponding to the travel of said plunger relatively to said housing before said disk-like base of said plunger is obstructed by said shoulder within said axial bore of said housing.

An automobile adjustable abutment, in accordance with the present invention, will now be described in greater detail, by way of example only, with reference to the accompanying drawings, in which:-
Figure 1 is a side view of an automobile adjustable abutment according to the present invention; and
Figure 2 is a partial cross-sectional view of the automobile adjustable abutment of Figure 1.

The accompanying drawings shown an automobile adjustable abutment according to the present invention in the form of an automobile decklid pop-up bumper 10 which comprises a housing 12 and, extending from within the housing 12, a plunger 14.

The housing 12 includes an enlarged end portion 20 having a hexagonal nut portion 22, a cylindrical portion 24, and a raised generally part-spherical surface portion 26 on the cylindrical portion 24 opposite the hexagonal nut portion 22. The surface portion 26 is arranged to abut or engage the undersurface of a bonnet of an automobile when closed.

Extending from the end portion 20 is a shank portion 28 which includes a root 30. Upon the root 30 there is formed a helical thread 32 having a leading flank 34 and a trailing flank 36.

The housing 12 also includes a nose portion 38 which is an extension of the shank portion 28 and has a diameter equal to the diameter of the root 30. The nose portion 38 is provided to lead the bumper 10 into a helical impression and aperture in a workpiece. The housing 12 is preferably formed by a moulding operation of a material having an elastomeric characteristic such as, for example, nylon.

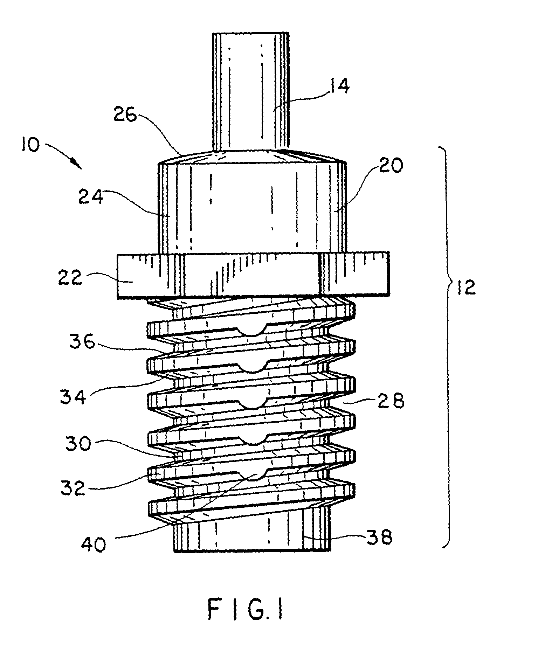

As can clearly be seen in Figure 1, the leading flank 34 of the helical thread 32 is provided with a plurality of ribs 40 which extend radially outwardly from the root 30 of the shank portion 28. Preferably, at least two such ribs 40 are provided for each turn of the helical thread 32 and are unequal in number to the number of indentations formed about the aperture into which the bumper 10 is disposed. Alternatively, four such ribs 40 per turn of the helical thread 32 may be provided.

The ribs 40 constitute a first plurality of detent means separated at predetermined circumferentially spaced intervals. The ribs 40 releasably lock the bumper 10 against rotation in a helically rimmed aperture provided with a plurality of indentations. The plurality of indentations constitute a second plurality of detent means separated at predetermined circumferentially spaced intervals about the helically rimmed aperture.

The number of ribs 40 provided is generally different from the number of indentations.

The circumferentially spaced intervals of said first plurality of detent means may be unequal to the circumferentially spaced intervals of said second plurality of detent means. In this way, the angular spacing between successive locking positions of said bumper 10 are circumferentially spaced a distance less than the circumferentially spaced intervals of either said first or second plurality of detent means.

The ribs 40 extend from the crest of the helical thread 32 to the root 30. The ribs 40 could, however, terminate tangent to the root 30 or just short of the root 30. In either of these alternative constructions, the bumper 10 will function as required.

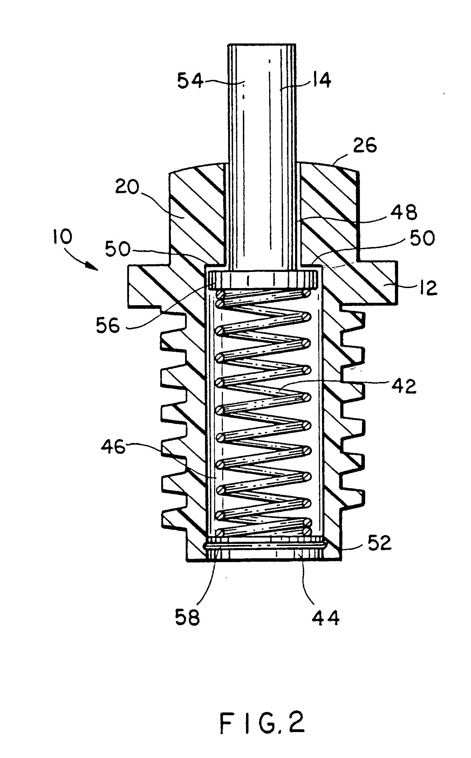

Figure 2 is a partial cross-sectional view of the automobile decklid pop-up bumper 10 which may be seen to additionally comprise a helical spring 42 and a cap 44.

As is apparent in Figure 2, housing 12, which is the sole element presented in cross-section, has an axial bore 46 with a portion 48 of reduced radial dimension defining a shoulder 50. At the end of the axial bore 46 further from the shoulder 50 is a groove 52 running circumferentially about the surface thereof.

Plunger 14 is disposed within axial bore 46 and comprises an elongate cylindrical portion 54 and a disk-like base 56 of greater radial dimension than portion 54. By interfering with disk-like portion 54, shoulder 50 prevents plunger 14 from passing completely through axial bore 46.

Plunger 14 is preferably moulded from a polymeric resin material, such as an acetal resin or a nylon resin.

Helical spring 42 is disposed in axial bore 46, where it is compressed against disk-like portion 54 of plunger 14 when cap 44 seals it therein. Cap 44, also essentially disk-shaped, has a circumferential flange 58 enabling it to snappingly seal the axial bore 46 through the interference fit of flange 58 within groove 52. Alternatively, or additionally, cap 44 may be sonically welded in place.

Spring 42, preferably made of steel, biases the plunger 14 outward from the axial bore 46, as it is compressed between disk-like portion 54 and cap 44. Elongate cylindrical portion 54 of plunger 14 protrudes through the centre of the part-spherical surface portion 26 of the enlarged end portion 20 of housing 12, but is even with said part-spherical surface portion 26 when the bonnet is closed upon it and latched.

Cap 44 is preferably moulded from a reinforced polymeric resin material, such as 30% glass-filled nylon black.

From the foregoing, it can be appreciated that the present automobile decklid pop-up bumper 10 provides a new and improved bonnet bumper assembly compared with that shown in US-A-4653968. By virtue of the spring-biased plunger 14 incorporated in the bumper 10, the elongate cylindrical portion 54 of which is compressed within axial bore 46 when the automobile bonnet is closed and latched, the bonnet may be lifted by a small amount when the latch mechanism is released enabling the bonnet to be grasped more easily for complete raising.

## Claims

1. An automobile adjustable abutment (10) in an automobile frame which has a substantially helical marginal portion defining an aperture and a first plurality of detent means at circumferentially spaced intervals on said helical marginal portion engaging an automobile bonnet which is movable relatively to said automobile frame, said adjustable abutment (10) comprising:
a member (12) having an end portion (20) engaging said automobile bonnet and having a shank portion (28) extending from said end portion for insertion through said aperture in said automobile frame, said shank portion (28) including a helical thread (32) threadingly engaging said helical marginal portion around said aperture, and said shank portion (28) further including a second plurality of detent means (40) at circumferentially spaced intervals engaging with said first plurality of detent means on said helical marginal portion, thereby releasably locking said member (12) against rotation with respect to said automobile frame to set said member (12) at a selected position with respect to said automobile bonnet;
characterised in that said member is in the form of a housing (12) having an axial bore (46) with a portion (48) of reduced radial dimension within said end portion (20) such that said portion (48) of reduced radial dimension defines a shoulder (50) within said axial bore (46);
a plunger (14) is provided, said plunger having an elongate cylindrical portion (54) and a disk-like base (56) of greater radial dimension than said elongate cylindrical portion, said plunger (14) being disposed within said axial bore (46) such that said elongate cylindrical portion (54) extends through said portion (48) of reduced radial dimension and said disk-like base (56) interferes with said shoulder (50) to prevent said plunger (14) from passing completely through said axial bore (46); and
means (42, 44) is provided for biasing said disk-like base (56) of said plunger (14) towards said shoulder (50);
whereby, in use, when a latch mechanism for retaining said automobile bonnet is released, said automobile bonnet is lifted relatively to said automobile frame by an amount corresponding to the travel of said plunger (14) relatively to said housing (12) before said disk-like base (56) of said plunger (14) is obstructed by said shoulder (50) within said axial bore (46) of said housing (12).

2. An automobile adjustable abutment according to claim 1, characterised in that said means for biasing said disk-like base (56) of said plunger (14) towards said shoulder (50) comprises a spring (42) disposed within said axial bore (46) against said disk-like base (56) of said plunger (14) and means (44) for compressing said spring (42) against said disk-like base (56).

3. An automobile adjustable abutment according to claim 2, characterised in that said means for compressing said spring (42) against said disk-like base (56) is a cap (44) secured across said axial bore (46).

4. An automobile adjustable abutment according to claim 3, characterised in that said cap (44) is sonically welded across said axial bore (46).

5. An automobile adjustable abutment according to claim 3, characterised in that said cap (44) is a disk having a circumferential flange (58) and said axial bore (46) has a circumferential groove (52) whereby said cap may be snappingly engaged across said axial bore by an interference fit between said flange (58) of said cap and said groove (52) of said axial bore.

6. An automobile adjustable abutment according to claim 5, characterised in that said cap (44) is also sonically welded across said axial bore (46).

7. An automobile adjustable abutment according to any one of claims 3 to 6, characterised in that said cap (44) is moulded from a reinforced polymeric resin material.

8. An automobile adjustable abutment according to any one of claims 2 to 7, characterised in that said spring (42) is a helical spring.

9. An automobile adjustable abutment according to any preceding claim when assembled with a frame for an engine compartment of an automobile and engaged with a bonnet for said automobile.

## Patentansprüche

1. Einstellbarer Anschlag (10) an Autos in einem Autorahmen, umfassend einen im wesentlichen schraubenförmigen, eine Öffnung bildenden Randabschnitt und eine erste Vielzahl von Arretierungsmitteln in am Umfang verteilten Abständen an dem schraubenförmigen Randabschnitt, die in eine Automotorhaube eingreifen, die relativ zu dem Auto beweglich ist, wobei der einstellbare Anschlag (10) folgendes umfaßt:
ein Glied (12) mit einem in die Automotorhaube eingreifenden Endabschnitt (20) und mit einem von dem Endabschnitt ausgehenden Schaftabschnitt (28) zum Einführen durch die Öffnung in den Autorahmen, wobei der Schaftabschnitt (28) ein gewindeartig in den schraubenförmigen Endabschnitt um die Öffnung herum eingreifendes Schraubengewinde (32) umfaßt und der Schaftabschnitt (28) ferner eine zweite Vielzahl von Arretierungsmitteln (40) in am Umfang verteilten Abständen umfaßt, die mit der ersten Vielzahl von Arretierungsmitteln an dem schraubenförmigen Randabschnitt zusammengreifen und dadurch das Glied (12) lösbar gegen eine Drehung gegenüber dem Autorahmen verriegelt, um das Glied (12) an einer gewählten Lagestelle gegenüber der Automotorhaube festzustellen;
dadurch gekennzeichnet, daß das Glied die Form eines Gehäuses (12) mit einer axialen Bohrung (46) mit einem Abschnitt (48) von vermindertem Radialmaß in dem Endabschnitt (20) aufweist, so daß der Abschnitt (48) von vermindertem Radialmaß einen Ansatz (50) in der axialen Bohrung (46) bildet;
ein Kolben (14) vorgesehen ist, wobei der Kolben einen langgestreckten zylindrischen Abschnitt (54) und eine scheibenartige Basis (56) von größerem Radialmaß als der langgestreckte zylindrische Abschnitt aufweist, und der Kolben (14) derart in der axialen Bohrung (46) angeordnet ist, daß sich der langgestreckte zylindrische Abschnitt (54) durch den Abschnitt (48) von vermindertem Radialmaß erstreckt und die scheibenartige Basis (56) mit dem Ansatz (50) zusammenwirkt, um zu verhindern, daß der Kolben (14) vollständig durch die axiale Bohrung (46) läuft; und
Mittel (42, 44) zum Vorspannen der scheibenartigen Basis (56) des Kolbens (14) in Richtung zu dem Ansatz (50) vorgesehen sind;
wobei in Gebrauch, wenn ein Schnappmechanismus zum Festhalten der Automotorhaube ausgelöst wird, die Automotorhaube relativ zu dem Autorahmen um ein Maß gehoben wird, das dem Laufweg des Kolbens (14) relativ zu dem Gehäuse (12) entspricht, bevor die scheibenartige Basis (56) des Kolbens (14) von dem Ansatz (50) in der axialen Bohrung (46) des Gehäuses (12) blockiert wird.

2. Einstellbarer Anschlag an Autos gemäß Anspruch 1, dadurch gekennzeichnet, daß die Mittel zum Vorspannen der scheibenartigen Basis (56) des Kolbens (14) in Richtung zu dem Ansatz (50) eine in der axialen Bohrung (46) gegen die scheibenartige Basis (56) des Kolbens (14) angeordnete Feder (42) und ein Mittel (44) zum Zusammendrücken der Feder (42) gegen die scheibenartige Basis (56) umfaßt.

3. Einstellbarer Anschlag an Autos gemäß Anspruch 2, dadurch gekennzeichnet, daß das Mittel zum Zusammendrücken der Feder (42) gegen die scheibenartige Basis (56) eine auf der axialen Bohrung (46) befestigte Kappe (44) ist.

4. Einstellbarer Anschlag an Autos gemäß Anspruch 3, dadurch gekennzeichnet, daß die Kappe (44) mit Ultraschall auf die axiale Bohrung (46) geschweißt ist.

5. Einstellbarer Anschlag an Autos gemäß Anspruch 3, dadurch gekennzeichnet, daß die Kappe (44) eine Scheibe mit einem umlaufenden Flansch (58) ist und die axiale Bohrung (46) eine umlaufende Nut (52) aufweist, wodurch die Kappe durch eine Preßpassung zwischen dem Flansch (58) der Kappe und der Nut (52) der axialen Bohrung einrastend auf der axialen Bohrung in Eingriff gebracht werden kann.

6. Einstellbarer Anschlag an Autos gemäß Anspruch 5, dadurch gekennzeichnet, daß die Kappe (44) ebenfalls durch Ultraschall auf die axiale Bohrung (46) geschweißt ist.

7. Einstellbarer Anschlag an Autos gemäß einem der Ansprüche 3 bis 6, dadurch gekennzeichnet, daß die Kappe (44) aus einem verstärkten polymeren Harz geformt ist.

8. Einstellbarer Anschlag an Autos gemäß einem der Ansprüche 2 bis 7, dadurch gekennzeichnet, daß die Feder (42) eine Schraubenfeder ist.

9. Einstellbarer Anschlag an Autos gemäß einem vorhergehenden Anspruch in Zusammenfügung mit einem Rahmen für einen Motorraum eines Autos und in Eingriff mit einer Motorhaube für das Auto.

## Revendications

1. Butée réglable pour automobile (10) dans un châssis d'automobile, qui comporte une partie marginale sensiblement hélicoïdale définissant une ouverture et une première pluralité de moyens formant butée à des intervalles circonférentiellement espacés sur ladite partie marginale hélicoïdale, venant en prise avec un capot d'automobile qui est mobile par rapport audit châssis d'automobile, ladite butée réglable (10) comprenant :
un élément (12) comportant une partie d'extrémité (20) venant en prise avec ledit capot d'automobile et comportant une partie de tige (28) s'étendant à partir de ladite partie d'extrémité pour l'insertion à travers ladite ouverture dans ledit châssis d'automobile, ladite partie de tige (28) comportant un filetage hélicoïdal (32) venant en prise par vissage avec ladite partie marginale hélicoïdale autour de ladite ouverture, et ladite partie de tige (28) comprenant de plus une deuxième pluralité de moyens formant butée (40) à des intervalles circonférentiellement espacés, venant en prise avec ladite première pluralité de moyens formant butée sur ladite partie marginale hélicoïdale, de façon à bloquer ainsi de manière libérable ledit élément (12) à l'encontre de la rotation par rapport audit châssis d'automobile afin d'établir ledit élément (12) en une position sélectionnée par rapport audit capot d'automobile ;
caractérisée en ce que ledit élément se présente sous la forme d'un boîtier (12) comportant un perçage axial (46) avec une partie (48) de dimension radiale réduite à l'intérieur de ladite partie d'extrémité (20), de telle sorte que ladite partie (48) de dimension radiale réduite définisse un épaulement (50) à l'intérieur dudit perçage axial (46) ;
un plongeur (14) est présent, ledit plongeur comportant une partie cylindrique allongée (54) et une base en forme de disque (56) de dimension radiale supérieure à celle de ladite partie cylindrique allongée, ledit plongeur (14) étant disposé à l'intérieur dudit perçage axial (46) de telle sorte que ladite partie cylindrique allongée (54) s'étende à travers ladite partie (48) de dimension radiale réduite et que ladite base en forme de disque (56) interfère avec ledit épaulement (50) de façon à empêcher ledit plongeur (14) de passer complètement à travers ledit perçage axial (46) ; et
des moyens (42, 44) sont présents pour solliciter ladite base en forme de disque (56) dudit plongeur (14) en direction dudit épaulement (50) ;
grâce à quoi, lors de l'utilisation, lorsqu'un mécanisme de verrouillage pour maintenir ledit capot d'automobile est libéré, ledit capot d'automobile est soulevé par rapport audit châssis d'automobile d'une ampleur correspondant au déplacement dudit plongeur (14) par rapport audit boîtier (12) avant que ladite base en forme de disque (56) dudit plongeur (14) ne soit bloquée par ledit épaulement (50) à l'intérieur dudit perçage axial (46) dudit boîtier (12).

2. Butée réglable pour automobile selon la revendication 1, caractérisée en ce que lesdits moyens pour solliciter ladite base en forme de disque (56) dudit plongeur (14) en direction dudit épaulement (50) comprennent un ressort (42) disposé à l'intérieur dudit perçage axial (46) contre ladite base en forme de disque (56) dudit plongeur (14) et un moyen (44) pour comprimer ledit ressort (42) contre ladite base en forme de disque (56).

3. Butée réglable pour automobile selon la revendication 2, caractérisée en ce que ledit moyen pour comprimer ledit ressort (42) contre ladite base en forme de disque (56) est un capuchon (44) fixé en travers dudit perçage axial (46).

4. Butée réglable pour automobile selon la revendication 3, caractérisée en ce que ledit capuchon (44) est soudé par des moyens soniques en travers dudit perçage axial (46).

5. Butée réglable pour automobile selon la revendication 3, caractérisée en ce que ledit capuchon (44) est un disque comportant un flasque circonférentiel (58), et en ce que ledit perçage axial (46) comporte une rainure circonférentielle (52), grâce à quoi ledit capuchon peut venir en prise par encliquetage dans ledit perçage axial par un joint par interférence entre ledit flasque (58) dudit capuchon et ladite rainure (52) dudit perçage axial.

6. Butée réglable pour automobile selon la revendication 5, caractérisée en ce que ledit capuchon (44) est également soudé par des moyens soniques en travers dudit perçage axial (46).

7. Butée réglable pour automobile selon l'une quelconque des revendications 3 à 6, caractérisée en ce que ledit capuchon (44) est moulé à partir d'un matériau en résine polymère renforcée.

8. Butée réglable pour automobile selon l'une quelconque des revendications 2 à 7, caractérisée en ce que ledit ressort (42) est un ressort hélicoïdal.

9. Butée réglable pour automobile selon l'une quelconque des revendications précédentes, lorsqu'elle est assemblée avec un châssis pour un compartiment moteur d'une automobile et qu'elle vient en prise avec un capot pour ladite automobile.
